# FASCICULE DE BREVET EUROPEEN

(11) **EP 2 525 688 B1**
(45) Date de publication et mention de la délivrance du brevet: **03.04.2019**
(21) Numéro de dépôt: 11704643.3
(22) Date de dépôt: 12.01.2011
(51) Int. Cl.: A47C 31/02, B60N 2/58

(54) **ASSEMBLAGE D'UN OBJET MOULE COMPORTANT UNE PLURALITE D'ELEMENTS A CROCHETS SURMOULES ET D'UN RECOUVREMENT**
ANORDNUNG EINES GEFORMTEN OBJEKTS MIT EINER VIELZAHL UMGESPRITZTER HAKENELEMENTE UND MIT EINER ABDECKUNG
ASSEMBLY OF A MOLDED OBJECT THAT COMPRISES A PLURALITY OF OVERMOLDED HOOK ELEMENTS AND FURTHER COMPRISES A COVERING

(30) Priorité: 20.01.2010 FR 1000217
(43) Date de publication de la demande: 28.11.2012
(73) Titulaire: Aplix, 44850 Le Cellier (FR)
(72) Inventeur: BILLARANT, Fabrice, F-44000 Reze (FR); WOODLING, Marc, F-44850 Le Cellier (FR)
(74) Mandataire: Henrich, Christel
(86) Numéro de dépôt international: PCT/FR2011/000015
(87) Numéro de publication internationale: WO 2011/089333

(56) Documents cités:
- WO-A1-01/37710
- WO-A1-2008/037453
- JP-A- 2003 011 137
- US-A1- 2003 162 008
- US-A1- 2003 215 601

## Description

La présente invention se rapporte à un assemblage comportant un objet moulé, notamment un coussin de véhicule automobile, au moins deux éléments à crochets surmoulés à l'objet moulé et un recouvrement qui recouvre au moins en partie l'objet moulé, le recouvrement étant fixé à l'objet moulé par l'intermédiaire d'un dispositif auto agrippant à crochets et boucles ou à crochets dans crochets, des crochets étant issus des éléments à crochets surmoulés et coopérant pour la fixation avec des boucles ou des crochets issus du recouvrement.

Du document US 2003/0162008 on connaît un assemblage comportant un objet moulé ayant une surface extérieure et un recouvrement qui recouvre la surface extérieure, une gorge ou tranchée étant formée dans l'objet moulé en ayant deux faces latérales opposées se rejoignant pour former un fond de tranchée, un élément surmoulé ayant deux ergots étant disposé au fond de la tranchée et un jonc solidaire du recouvrement étant introduit dans la tranchée et coopérant par butée ou clipsage avec les ergots respectifs pour maintenir le recouvrement autour de l'objet moulé.

Ce genre d'assemblage est compliqué à fabriquer, notamment pour positionner convenablement les ergots en saillie des parois latérales de la tranchée, et la fixation obtenue n'est pas aussi fiable que celle que l'on obtient par une fixation par auto agrippant à crochets et boucles. En outre, une fois le clipsage du jonc dans les ergots effectué, il est très difficile, voire impossible, de défaire la fixation sans détériorer le recouvrement.

Dans l'art antérieur on connaît des assemblages comportant un objet moulé et un recouvrement, l'objet moulé comportant, formée à sa surface extérieure, une gorge ou tranchée ayant deux faces latérales se rejoignant en un fond duquel des crochets font saillie et coopèrent avec des boucles issues du recouvrement. Ces assemblages comportant pour la fixation du recouvrement un système à crochets et boucles sont plus fiables que ceux décrits dans US 2003/0162008 mais sont plus coûteux et notamment il est nécessaire de tapisser de crochets sensiblement la totalité du fond pour que la fixation soit suffisamment résistante aux forces de traction. En particulier, les crochets font parties d'éléments à crochets que l'on dispose dans le fond de la tranchée, les éléments à crochets étant alignés en continu, c'est à dire bout à bout, ce qui rend l'assemblage coûteux à fabriquer, car ces éléments à crochets sont très coûteux. Les documents US 2003/215601 et WO 2008/037453 présentent deux autres systèmes de fixation présentant également de tels inconvénients.

Un premier aspect de la présente invention vise à surmonter les inconvénients de l'art antérieur en proposant un assemblage, constitué d'un objet moulé et d'un recouvrement, qui, bien que comportant une fermeture à crochets et boucles (qui assure une très grande simplicité d'exécution lors de la pose du recouvrement autour de l'objet moulé et permet en particulier de défaire la fixation et la reprendre si nécessaire, par exemple en vue de repositionner le recouvrement), soit moins coûteux à fabriquer sans pour autant perdre le caractère fiable et résistant aux tractions que confère l'utilisation d'auto agrippants à crochets et boucles pour assurer la fixation du recouvrement.

Suivant ce premier aspect de l'invention tel que défini dans la revendication 1, l'assemblage comporte un objet moulé et un recouvrement qui recouvre au moins en partie la surface extérieure de l'objet moulé, au moins une gorge ou tranchée longitudinale étant formée dans l'objet moulé en étant ouverte vers l'extérieur, au moins un élément à crochets comportant des crochets étant surmoulé à l'objet moulé de sorte à former au moins une partie du fond de la gorge, des crochets, de préférence les crochets pénétrant à l'intérieur d'ouvertures de boucles issues du recouvrement pour s'y accrocher et assurer la fixation du recouvrement à l'objet moulé, caractérisé en ce que
- il est prévu au moins deux éléments surmoulés à crochets qui forment au moins en partie le fond de la tranchée en étant disposés l'un à la suite de l'autre dans la direction longitudinale, les deux éléments à crochets étant séparés l'un de l'autre par une zone intermédiaire dans laquelle il n'y a pas d'élément à crochets ; et
- les boucles sont issues de la surface extérieure d'un gousset fixé au recouvrement, et un jonc s'étend à l'intérieur du gousset de manière à empêcher la remontée du recouvrement vers le haut de la tranchée.

Ainsi, suivant l'invention, on utilise des auto agrippants à crochets et boucles pour la fixation du recouvrement autour de l'objet mais en moindre quantité ce qui a un effet très favorable sur le coût, mais cependant sans nuire à la grande simplicité de fabrication de l'assemblage et de sa pose, ni à la fiabilité de la fixation, notamment à sa résistance à la traction, cette dernière étant conservée voire améliorée par les moyens anti remontée.

Ainsi, les boucles sont issues de la surface extérieure d'un gousset fixé au recouvrement et les moyens pour empêcher l'effet de tente sont constitués d'un jonc qui s'étend à l'intérieur du gousset.

Ainsi, par rapport à l'art antérieur dans lequel sont également-prévu des systèmes à crochets et boucles pour la fixation du recouvrement à l'objet moulé, on a prévu moins de crochets, ce qui diminue fortement les coûts, et on a prévu' en remplacement le jonc rigide, notamment en matière thermoplastique, beaucoup moins coûteux mais qui cependant permet d'obtenir une résistance à la traction vers le haut aussi bonne voir meilleure. En outre, dans le cas d'une tranchée qui ne s'étend pas rectilignement, mais comportant des parties incurvées, on peut malgré tout utiliser des éléments surmoulés rectilignes, leur adaptation à l'extension incurvée étant facilitée par le fait qu'ils peuvent être espacés les uns des autres et n'ont pas besoin d'être disposés en continu sur toute l'extension de la tranchée, qui sinon devraient avoir une forme incurvée correspondante.

De préférence, les boucles sont issues de la partie inférieure de la périphérie du gousset, en particulier uniquement de cette partie.

Selon l'invention revendiquée, la longueur de la zone intermédiaire, c'est à dire la distance entre deux éléments surmoulés voisins successifs dans la direction longitudinale est telle que, sans le jonc, il apparaît un effet de remontée; et la matière et les dimensions du
jonc sont telles qu'il est suffisamment rigide pour qu'il y ait un moindre effet de remontée lorsqu'il est reçu dans le gousset, et notamment pour qu'il n'y en ait plus.

Suivant un mode de réalisation préféré, chaque élément à crochets a en section transversale la forme d'un U ou d'un C dont les deux branches sont dirigées vers l'extérieur de la gorge, la surface intérieure du U ou du C comportant deux tronçons d'extrémité distale ou supérieure dont aucun crochet ne fait saillie et un tronçon de fond intermédiaire duquel les crochets de l'élément à crochet font saillie.

Suivant un mode de réalisation avantageux, la gorge a deux faces latérales formées par la matière de moulage de l'objet moulé qui s'étendent de l'extérieur jusqu'aux bords supérieurs ou distaux respectifs des branches du U ou du C de chaque élément à crochets et les surfaces intérieures respectives des deux branches du U ou du C sont en affleurement avec les faces latérales respectives.

En particulier, les faces latérales de la gorge sont verticales et viennent au droit des bords supérieurs intérieurs des branches respectives du U ou du C.

Suivant un mode de réalisation préféré, la gorge comporte au moins un tronçon de forme incurvée dans lequel s'étend au moins un élément surmoulé, de forme rectiligne ou incurvée, la longueur de l'élément surmoulé étant moindre que celle du tronçon incurvé.

De préférence, on définit la largeur de la gorge comme la plus petite distance entre deux de ses parois se faisant face, et notamment lorsque les éléments à crochets sont alignés dans une direction donnée, la largeur de la tranchée se mesure perpendiculairement à cette direction donnée, et la dimension en largeur de l'élément à boucle, c'est à dire la somme de la dimension en largeur du jonc et de deux fois l'épaisseur du gousset, est sensiblement égale à la largeur de la tranchée en étant cependant juste inférieure à cette largeur de la tranchée.

De préférence, la distance entre les points respectifs les plus à l'intérieur des bords supérieurs des deux branches du U ou du C de chaque surmoulé est sensiblement égale à la dimension en largeur de l'élément à boucle, c'est à dire la somme de la dimension en largeur du jonc et de deux fois l'épaisseur du gousset, en étant cependant juste supérieure à cette dimension en largeur.

De préférence, le gousset est fixé au recouvrement, notamment en étant cousu, au niveau de la superposition de deux bords de deux pièces ou feuilles du recouvrement.

De préférence, la distance intermédiaire entre les au moins deux éléments surmoulé à crochets est supérieure à 50% de la plus grande dimension, notamment la dimension en longueur, de chaque élément surmoulé, de préférence est supérieure à la plus grande dimension en longueur de chaque surmoulé.

De préférence, la distance entre les au moins deux surmoulés est supérieure à 20mm, notamment supérieure à 100 mm, notamment est comprise entre 100mm et 500 mm.

De préférence, le jonc a une section transversale de forme ovale, notamment avec son grand axe orienté dans la direction allant du fond de la tranchée vers l'extérieur, c'est à dire sensiblement perpendiculaire à la base de chaque surmoulé.

Suivant un mode de réalisation particulièrement préféré, le jonc a une section transversale rectangulaire dont les coins sont arrondis, et notamment la longueur, dans le cas d'une forme rectangulaire, est orientée dans la direction allant du fond de la tranchée vers l'extérieur.

Suivant un deuxième aspect de l'exposé, indépendant du premier aspect et formant en soi une invention et ne faisant pas partie de l'objet revendiqué, le surmoulage des éléments surmoulés à crochet se fait en utilisant un ensemble comportant d'une part au moins un élément surmoulé à crochets, notamment au moins deux éléments surmoulés à crochets, destiné(s) à être surmoulé(s) à un objet moulé, l'élément ou chaque élément formant un espace intérieur ouvert délimité par deux parois latérales d'extrémité et un fond duquel fait ou font saillie un ou des crochets, issu (s) de l'élément; et d'autre part un moule dont la ou les parois intérieure(s) définisse(nt) un volume intérieur de la forme de l'objet destiné à être formé par moulage dans le moule, au moins un piédestal faisant saillie dans le volume intérieur à partir de cette ou ces parois intérieure (s), l'élément surmoulé étant pendant la coulée de la mousse de moulage en contact avec le piédestal, le piédestal comportant une partie en forme de muret ayant deux faces latérales extérieures opposées, notamment parallèles, caractérisé en ce que pendant la coulée de la mousse les parois latérales d'extrémité respectives de l'élément surmoulé sont en contact avec les faces latérales extérieures opposées respectives, notamment suivant au moins une ligne de contact respective, sans interposition entre elles de crochets, notamment sans interposition entre elles des crochets.

En effet, on enserre le piédestal par les deux parois latérales, de sorte que celles-ci portent contre les deux faces latérales, notamment de manière élastique, pour assurer une étanchéité vis à vis de la mousse liquide versée de l'espace inter parois latérales comportant le ou les crochets.

Une telle utilisation est particulièrement favorable, car la combinaison de la tranchée étroite obtenue grâce à cet ensemble, d'éléments surmoulés à crochets d'un tel ensemble et d'un élément à boucles comme suivant l'invention, permet de prévoir au fond de la tranchée moins d'éléments surmoulés à crochets que dans l'art antérieur et ce sans pour autant avoir à subir l'effet de tente. Cependant, on peut également utiliser des éléments surmoulés à crochets classiques, c'est à dire notamment ceux sans parois latérales ou comportant des cocons pour protéger les crochets, tout en restant dans le domaine protégé par l'invention.

Suivant un mode de réalisation préféré, l'élément à crochet enserre à force par ses deux parois latérales le piédestal.

Suivant un perfectionnement le contact entre l'élément à crochet et le piédestal se fait par clipsage.

Suivant un mode de réalisation préféré, chaque paroi latérale de l'élément à crochet a un bord d'extrémité le plus vers l'intérieur, la hauteur du point le plus haut des crochets étant inférieure à la hauteur des bords d'extrémité les plus vers l'intérieur ; et le piédestal comporte une partie en forme de muret ayant deux faces latérales extérieures opposées à distance l'une de l'autre qui ont des formes sensiblement identiques aux formes des bords d'extrémité des parois latérales du surmoulé, et une épaisseur du muret, c'est à dire une distance entre les deux faces latérales mesurées dans une direction donnée étant juste supérieure à une distance entre les deux bords d'extrémité des deux parois latérales dans ladite direction donnée.

De préférence, les bords d'extrémité les plus à l'intérieur des deux parois latérales ont une forme rectiligne, de préférence en étant parallèles entre eux, et les deux faces latérales extérieures du muret ont, vu en plan de dessus, la même forme rectiligne, de sorte que lesdites lignes de contact respectives sont rectilignes.

De préférence, les deux parois latérales sont légèrement inclinées l'une vers l'autre, notamment en ayant, vu en coupe transversale, une forme en crochet, une forme en C, en arc de cercle, ou analogue.

De préférence, l'élément surmoulé comporte également deux parois avant et arrière, qui s'étendent transversalement par rapport aux parois latérales.

De préférence, les bords supérieurs respectifs des deux parois avant et arrière sont à des hauteurs respectives supérieures au point le plus haut des crochets, mais inférieure aux hauteurs des bords supérieurs des deux parois latérales.

Suivant un mode de réalisation préféré, il est prévu une ou plusieurs nervures d'étanchéité qui s'étend(ent) le long du bord ou des bords supérieurs des deux parois avant et arrière.

De préférence, le piédestal a un sommet ayant une forme sensiblement complémentaire de la forme des bords supérieurs des deux parois avant et arrière, de sorte qu'il peut venir reposer contre les deux bords supérieurs des parois, éventuellement avec interposition des joints d'étanchéité qui s'étendent le long des deux bords supérieurs des deux parois avant et arrière.

On ferme ainsi complètement l'espace intérieur ouvert dans lequel se trouvent les crochets, qui sont particulièrement bien protégés de la mousse au niveau des contacts entre les deux faces latérales du muret et les deux parois latérales du surmoulé, d'une part, et au niveau des deux parois avant et arrière et du sommet du muret, d'autre part.

Suivant un autre mode de réalisation, chaque bord supérieur le plus à l'intérieur forme une ligne incurvée, notamment en arc de cercle et les deux faces latérales, vu de en plan de dessus, ont des formes identiques à ces lignes incurvées, lesdites lignes de contact respectives étant constituées par ces lignes incurvées.

De préférence l'élément surmoulé s'étend au delà des deux parois latérales, vers l'extérieur, en formant ainsi une ou des lisières extérieures.

Dans l'objet moulé final, ces deux lisières seront totalement entourées par la mousse, et cet ancrage dans la mousse assure une excellente tenue du surmoulé à l'objet moulé. En particulier, dans le cas où l'élément surmoulé est un élément surmoulé qui est clipsé sur le piédestal de manière à l'enserrer avant le versement de la mousse, le bon ancrage dans la mousse de l'objet moulé à la fin du moulage assure que le surmoulé reste bien lié à l'objet moulé lorsqu'on déclipse le surmoulé(maintenant ancré surmoulé à l'objet moulé) du piédestal.

Le bon ancrage du surmoulé dans la mousse de l'objet moulé est encore plus favorisé par le fait que, dans le cas où le surmoulé comporte deux parois latérales entre lesquelles se trouvent les crochets, la mousse est en contact avec la totalité de la surface supérieure des parois latérales. Dans ce cas, la largeur de la tranchée est égale à la distance entre les deux bords intérieur supérieur des deux parois latérales.

De préférence, une ou chaque paroi latérale comporte une nervure extérieure, le muret ayant sa plus grande épaisseur au niveau de cette ou ces nervures, notamment les deux nervures étant au même niveau et ladite une épaisseur du muret étant la distance entre les deux points les plus extrêmes vers l'extérieur de ces deux nervures.

Est décrit également à un objet moulé comportant un corps principal en matière de moulage, notamment en mousse thermoplastique, et un ou des éléments à crochets surmoulés, qui sont surmoulés au corps principal moulé, la mousse étant en contact avec l'élément surmoulé, en section transversale sur tout le pourtour de l'élément surmoulé, à l'exception uniquement d'une région correspondant à l'espace intérieur de sorte qu'il est formé une gorge débouchant à l'extérieur du corps moulé, la gorge ayant notamment la forme complémentaire d'un muret ayant une ou des épaisseurs correspondant à la ou les distances entre les deux bords supérieurs intérieurs des deux parois latérales du piédestal.

Dans le cas d'une pluralité d'éléments surmoulés, c'est à dire dans le cadre du premier aspect de l'invention, les éléments surmoulés sont séparés les uns des autres par des zones intermédiaires sans crochets.

Le présent exposé se rapporte également à un procédé de fabrication par moulage d'un objet moulé d'un assemblage suivant l'invention qui peut comporter les étapes qui consistent à prendre un moulé ayant la forme de l'objet que l'on souhaite mouler, un piédestal en forme de muret faisant saillie d'une paroi du moule définissant le volume du moule; et caractérisé par l'étape qui consiste à enserrer le piédestal par un ou plusieurs éléments surmoulés ayant chacun deux parois latérales à distance l'une de l'autre et un fond duquel font saillie des crochets, de sorte que les deux parois latérales de l'élément à crochets viennent porter contre deux faces du piédestal le long d'au moins deux lignes de contact respectives sans interposition entre elles de crochets, de manière à rendre étanche l'espace intérieur entre les deux parois du surmoulé et à verser la mousse pour mouler l'objet, ce procédé de fabrication ne faisant pas partie de l'objet revendiqué.

Suivant un troisième aspect, indépendant des deux premiers aspects, formant en soi une invention et pouvant être utilisé en combinaison avec l'un quelconque des deux autres aspects ou avec les deux autres aspects mais ne faisant pas partie de l'objet revendiqué, le présent exposé se rapporte également à un élément surmoulé à crochet, notamment destiné à faire partie d'un assemblage suivant le premier aspect de la présente invention.

L'élément surmoulé à crochets comportant deux parois latérales qui sont à distance l'une de l'autre et un fond de manière à former un espace intérieur ouvert ayant une plus grande largeur mesurée dans une direction s'étendant d'une paroi à l'autre, notamment perpendiculairement aux deux parois, et au moins un crochet, de préférence une pluralité de crochets, étant issus du fond, est caractérisé en ce que les parties supérieures ou distales des deux parois latérales sont inclinées l'une vers l'autre, de sorte que la distance entre les deux points les plus à l'intérieur des bords supérieurs des deux parois est inférieure à ladite plus grande largeur.

De préférence, le fond, en section transversalement aux parois, a sensiblement la forme d'un arc de cercle, notamment dans la zone dont sont issus les crochets.

De préférence, les crochets de l'élément surmoulé ne font saillie que du fond de l'espace intérieur.

On décrit maintenant à titre d'exemple un mode de réalisation de l'invention en se reportant aux dessins dans lesquels :
- la Figure 1: est une vue en perspective de dessus d'un élément surmoulé à crochets d'un assemblage pouvant être utilisé dans l'invention ;
- la Figure 2: est une vue en coupe suivant la ligne A-A de la Figure 1;
- les Figures 3A, 3B et 3C: sont des vues en coupe d'une partie d'objets moulés respectifs suivant l'invention comportant l'élément surmoulé des Figures 1 et 2;
- les Figures 4A et 4B: sont des vues de côté de l'élément surmoulé à crochets des Figures 1 et 2 et d'un piédestal respectif en forme de muret sur lequel est positionné l'élément surmoulé à crochets;
- les Figures 5A et 5B: sont des vues similaires à celles Figures 4A et 4B, mais représentant l'état dans lequel le piédestal respectif en forme de muret est inséré à force (à la manière d'un clip) de manière à protéger de manière étanche l'espace intérieur de réception des crochets à l'intérieur de l'élément surmoulé à crochets, l'assemblage de la figure 5A correspondant à l'objet moulé de la Figure 3A et celui de la Figure 5B à l'objet moulé de la Figure 3B;
- la Figure 6: est une vue en coupe transversale d'un élément à boucles d'un assemblage suivant l'invention, issu d'un recouvrement destiné à recouvrir l'objet moulé de la Figure 3 ;
- les Figures 7 et 8: représentent de manière schématique la coopération de l'élément à boucles et de l'élément à crochets au fond de la tranchée de l'objet moulé de la Figure 3 lorsqu'il est recouvert par un recouvrement comportant l'élément à boucles de la Figure 6, dans le cas (Figure 8) où le jonc en matière plastique rigide est inséré à l'intérieur du gousset et dans le cas (Figure 7) où il ne l'est pas ;
- la figure 9: représente schématiquement un autre mode de réalisation d'un élément surmoulé à crochet suivant une vue en coupe transversale identique à celle de la figure 2 ;
- la figure 10: représente un autre mode de réalisation possible d'un piédestal d'un assemblage suivant l'invention suivant une vue identique aux figures 4 ou 5 ;
- la figure 11: est une vue en coupe dans une tranchée de l'objet moulé d'un assemblage suivant l'invention ;
- la figure 12: est une vue identique à la figure 11 d'un autre mode de réalisation d'un assemblage suivant l'invention ;
- la figure 13: est une vue en coupe schématique d'un mode de réalisation d'un recouvrement d'un objet moulé suivant l'invention ;
- la figure 14: est une vue en coupe schématique d'un autre mode de réalisation d'un recouvrement d'un objet moulé suivant l'invention ;
- la figure 15: est une vue d'un objet moulé, au dessus d'une tranchée qui dans ce mode de réalisation comporte des tronçons incurvés et des tronçons rectilignes ; et
- la figure 16: représente encore un autre mode de réalisation possible d'un piédestal d'un assemblage suivant l'invention suivant une vue identique aux figures 4 ou 5 ; et
- la figure 17: est une vue en coupe identique à celle de la figure 2 d'un autre mode de réalisation d'un élément surmoulé à crochets comportant un fond plat dont sont issus les crochets.

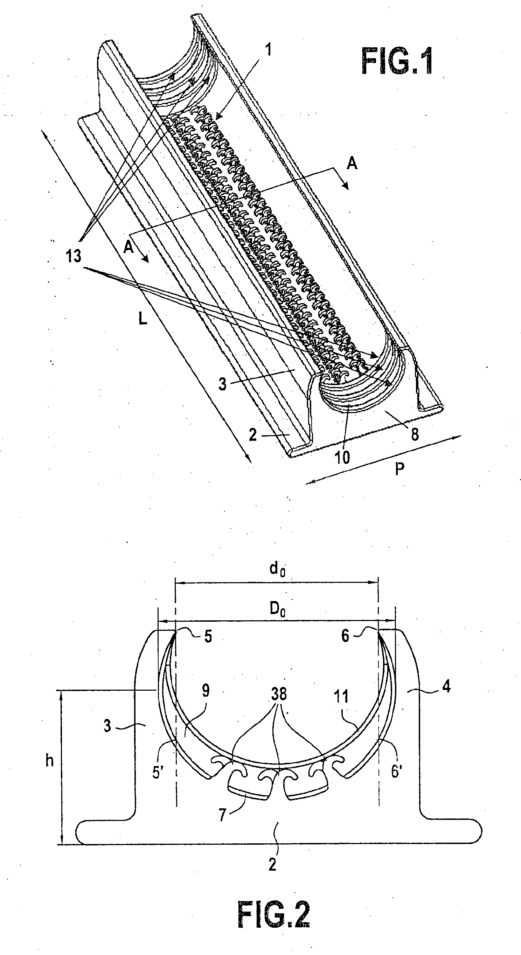

Aux figures, et notamment à la Figure 1, il est représenté suivant une vue en perspective un élément surmoulé à crochets suivant le troisième aspect de la présente invention et qui peut être mis en oeuvre dans les premier et/ou deuxième aspects de la présente invention. L'élément 1 est destiné à être disposé dans un moule pour former par moulage un objet moulé, l'objet à mouler étant en un matériau de moulage, notamment en une mousse, notamment une mousse thermoplastique. Lorsque la mousse va être versée dans le moule, celle-ci va venir de manière liquide au contact de l'élément surmoulé, puis, en se figeant, va réaliser la fixation à l'élément surmoulé. L'objectif est que, lors du versement de la mousse dans le moule, les crochets soient protégés pour que la mousse ne vienne pas les polluer en s'insérant sous les crochets, car une fois la mousse sous les crochets, ceux-ci deviennent inutilisables et ne peuvent plus coopérer avec des boucles pour réaliser leur fonction d'accrochage et de fixation à crochets dans boucles.

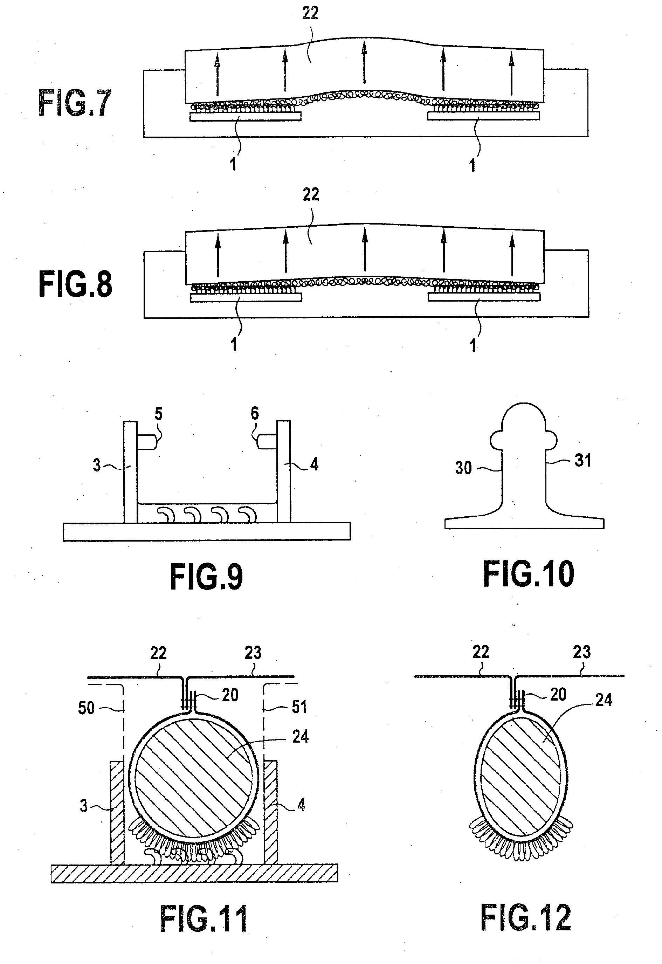

L'élément surmoulé 1 comporte une plaque 2 de base rectangulaire ayant une grande longueur L et une largeur 1. La longueur L s'étend dans la direction longitudinale de l'élément surmoulé tandis que la largeur l s'étend dans la direction transversale. Du côté supérieur de la plaque 2, s'étendent deux parois 3 et 4 latérales. Chacune de ces parois 3 et 4 latérales a un bord supérieur, ici constitué par une surface sensiblement horizontale à la figure, et chaque bord supérieur comporte une ligne 5 et 6 constituée des points du bord supérieur les plus à l'intérieur, c'est à dire du côté de l'autre paroi. En section transversale, notamment comme suivant la figure 2, ces lignes 5 et 6 forment un point le plus à l'intérieur respectif. Ces deux lignes 5 et 6 sont ici rectilignes. Suivant un autre mode de réalisation, représenté à la figure 9, ces bords supérieurs ne sont pas nécessairement une surface planes et peuvent être en échelon. Ainsi, à la figure 9, le bord supérieur comporte une première face horizontale (correspondant à la surface supérieure de la paroi 3 hors la nervure) suivie d'une deuxième face horizontale (la surface supérieure de la nervure) en échelon par rapport à la première face et terminé par une partie incurvée s'étendant du point de la deuxième face horizontale le plus à l'intérieur jusqu'au point le plus à l'intérieur de la partie incurvée qui correspond au point le plus à l'intérieur du bord supérieur des parois 3 et4.

Ainsi, en section transversale, notamment suivant la coupe A-A de la figure 1 représenté à la figure 2, le surmoulé a sensiblement la forme d'un U ou d'un C dont les branches sont constituées par les deux parois 3 et 4.

La surface intérieure du U ou du C est constituée de trois tronçons, à savoir deux tronçons d'extrémité qui s'étendent chacun du point 5, respectivement 6, le plus à l'intérieur jusqu'à un tronçon intermédiaire de fond qui est délimité par les crochets 38 les plus latéraux de part et d'autre. Ainsi, dans les deux tronçons d'extrémité il n'y a pas de crochets en saillie et l'ensemble des crochets du surmoulé font saillie du tronçon intermédiaire de fond.

Pour délimiter avec précision le fond d'un élément surmoulé de la présente invention, une première méthode de définition consiste ainsi à considérer les crochets et à définir le fond comme étant la plus petite surface délimitant l'espace intérieur dans laquelle se trouvent tous les crochets.

Une deuxième méthode consiste, dans chaque section transversale, à projeter verticalement (c'est à dire perpendiculairement au plan de la plaque de base à la figure 2 par exemple) les deux points (5 et 6) les plus à l'intérieur sur la surface intérieure délimitant l'espace intérieur pour obtenir les deux points projetés 5' et 6' entre lesquels on considérera que le fond s'étend.

Pour définir le fond d'un élément surmoulé suivant l'invention, on peut utiliser l'une ou l'autre des deux méthodes.

Aux figures 1 et 2, Les parties d'extrémité distales se terminant aux points 5 et 6 d'extrémité des parois 3 et 4 latérales sont légèrement inclinées l'une vers l'autre. Ainsi, en section transversale, par exemple au niveau de la coupe A-A, l'élément surmoulé 1 définit un espace intérieur en U ou en C ouvert délimité par les deux parois 3 et 4 et par la face supérieure de la plaque 2. Cet espace intérieur a, comme représenté, de préférence, un plancher 7 (la face supérieure de la plaque) correspondant au tronçon intermédiaire défini ci dessus. De ce plancher 7, font saillie les crochets 38. Ces crochets 38 peuvent être agencés comme on le souhaite, ils sont, de préférence, comme représentés, agencés suivant des rangées et des colonnes, notamment comme représenté en ayant leur tête qui, dans une colonne donnée, est orientée alternativement vers la gauche et vers la droite à la figure.

La plus grande distance D0, mesurée dans la direction perpendiculaire aux parois , c'est à dire la direction horizontale à la figure 2, est la distance entre les deux parois au niveau de la hauteur h. Elle est supérieure à la distance d0 entre les deux bords d'extrémité. La même relation se vérifie dans le mode de réalisation de la figure 9. A la figure 2, le mode de réalisation est tel que la section transversale est la même pour toute les sections transversale le long de la direction longitudinale entre les deux parois avant et arrière 9 et 10, car les parois et les bords sont ici rectilignes. Cependant, on peut envisager un mode de réalisation dans lequel cette section transversale va varier, par exemple lorsque les parois et les bords ont une certaine incurvation vu en plan de dessus, par exemple en arc de cercle ou en ovale, voire toute autre forme imaginable. Dans ce cas, la relation D0 supérieure à d0 est valable dans chaque section transversale.

Le surmoulé comporte également deux parois 8 et 9 avant et arrière. Les parois 8 et 9 avant et arrière et les parois latérales 3 et 4 et le plancher 7 de fond délimitent l'espace intérieur ouvert dans lequel se trouvent les crochets. Chaque paroi 8 et 9 avant et arrière a un bord supérieur 10 et 11 respectif, qui s'étend d'un bord 5 latéral à l'autre bord 6 latéral opposé. Ces bords 10 et 11 ont ici la forme d'un C. Le long des bords 10 et 11 supérieurs des parois 8 et 9 avant et arrière, s'étendent des joints d'étanchéité 13.

Vu de dessus, les bords supérieurs intérieurs des parois 8 et 9 sont des lignes droites. Ces lignes pourraient ne pas être droite et avoir une forme quelconque, notamment en comportant une ou des parties incurvées.

L'élément 1 décrit ci-dessus est destiné à être déposé dans un moule, dans lequel on va verser de la mousse liquide, qui en durcissant va se fixer aux parois 5 et 6 latérales ainsi qu'à la surface inférieure de la plaque 2 et aux faces extérieures des parois 8 et 9 avant et arrière pour ainsi fixer les crochets à l'objet moulé en mousse.

Dans le moule, au moins un piédestal 12 en forme de muret fait saillie de la paroi 16 intérieure du moule qui définit le volume ayant la forme de l'objet que l'on souhaite fabriquer par moulage. On peut prévoir un ou plusieurs piédestaux en fonction du nombre de tranchées que l'on souhaite former dans l'objet moulé final pour y disposer des crochets. En particulier on peut prévoir un réseaux de piédestaux qui vont former un réseau de tranchées, et certaines d'entre elles peuvent être incurvées. Pour éviter que la mousse ne soit versée sur les crochets, ni ne vienne en contact avec ceux-ci, il convient, lors du versement de la mousse, de protéger les crochets du contact avec la mousse versée. Pour ce faire, on clipse ou on enserre à force le ou les éléments surmoulés à crochets sur le ou les piédestaux, crochets tournés vers le piédestal. Sur un piédestal donné, on peut disposer un seul éléments surmoulés ou une pluralité d'entre eux, les uns à la suite des autres, et dans ce dernier cas, on peut soit les disposer à distance les uns des autres, comme dans le cadre du premier aspect de l'invention, mais également très proches les uns des autres, ou même bout à bout si on le souhaite.

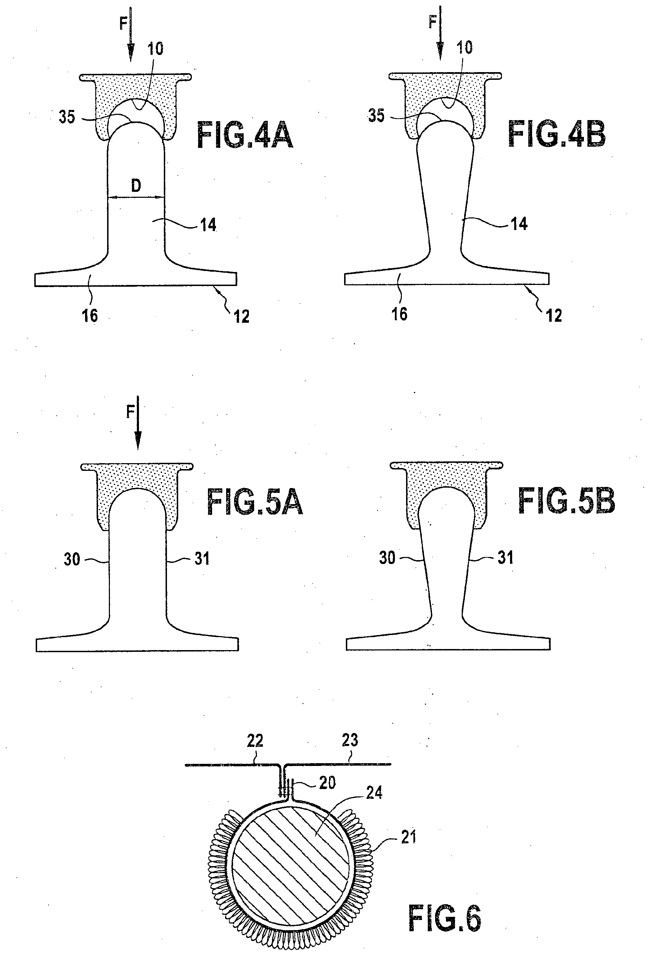

Le muret 12 comporte deux faces latérales 30 et 31 opposées. Vu de dessus, c'est à dire vu suivant la flèche F des figures 4 et 5, ces faces ont la forme d'une ligne droite. Elles ont ainsi la même forme que les bords supérieurs intérieurs 5 et 6 des deux parois latérales 3 et 4.

La distance D entre les deux faces 30 et 31, mesurée dans la direction (horizontale à la figure) perpendiculaire aux deux faces 30 et 31, ce qui correspond à l'épaisseur du muret, est sensiblement égale, en étant cependant légèrement supérieure, à la distance d0, mesurée dans la même direction entre les deux bords supérieurs 5 et 6 des parois 3 et 4 latérales.

Dans le cas où le muret n'a pas une épaisseur constante le long de son extension dans la direction longitudinale (perpendiculairement au plan des figures 4 ou 5), l'épaisseur D mesurée dans chaque section transversale sera sensiblement égale, en étant cependant légèrement supérieure, à la distance d0 entre les deux bords d'extrémité le plus intérieur 5 et 6 au niveau (le long de la direction longitudinale) où la mesure est effectuée, les formes des faces du muret étant complémentaire de celles des bords d'extrémité. Ainsi on pourrait par exemple prévoir une forme en arc de cercle plutôt que rectiligne pour ces bords 5 et 6 et pour les faces 30 et 31, l'important étant que les faces et les bords aient sensiblement la même forme pour assurer une étanchéité vis à vis de la mousse lorsque le muret est inséré entre les parois latérales.

Comme représenté aux figures 5A et 5B, lorsque l'élément surmoulé 1 est en contact avec les faces 30 et 31 du piédestal 12 pendant le moulage, ce contact a lieu suivant au moins les lignes rectilignes définies par les bords 5 et 6 d'extrémité. Dans le mode de réalisation représenté, ce contact a lieu sur des plans englobant ces lignes.

En outre, le muret 12 a une partie de sommet dont la forme est complémentaire de la forme des bords supérieurs 10 et 11 des parois 8 et 9 avant et arrière. Ainsi, ici le sommet du muret 12 a une forme en C ou en arc de cercle correspondant à la forme en C ou en arc de cercle des bords supérieurs des parois 8 et 9 avant et arrière. En venant presser l'élément 1 pour que ses deux parois latérales viennent enserrer le piédestal 12 entre leur deux bords 5 et 6, on écarte légèrement ces deux bords l'un de l'autre pour permettre le passage du muret en son sein jusqu'à ce que son sommet 35 vienne en contact avec les deux bords supérieurs 10 et 11 des parois 8 et 9 latérales. L'élasticité des deux bords d'extrémité fait qu'ils assurent l'étanchéité au niveau du contact avec les faces correspondantes du muret, les deux parois ayant tendance à revenir l'une vers l'autre par élasticité, tandis que les nervures d'étanchéité 13, qui se trouvent entre le sommet du muret 12 et les bords supérieurs des parois 8 et 9, assurent une excellente étanchéité des crochets lorsque la mousse est versée.

Suivant un perfectionnement représenté à la figure 10, on peut prévoir deux nervures qui font saillie latéralement des deux faces latérales 30 et 31 opposées du muret. La largeur la plus grande du muret dans une section transversale donnée est la distance D entre les deux points les plus latéraux des deux nervures, et cette distance D est supérieure à la distance d0.

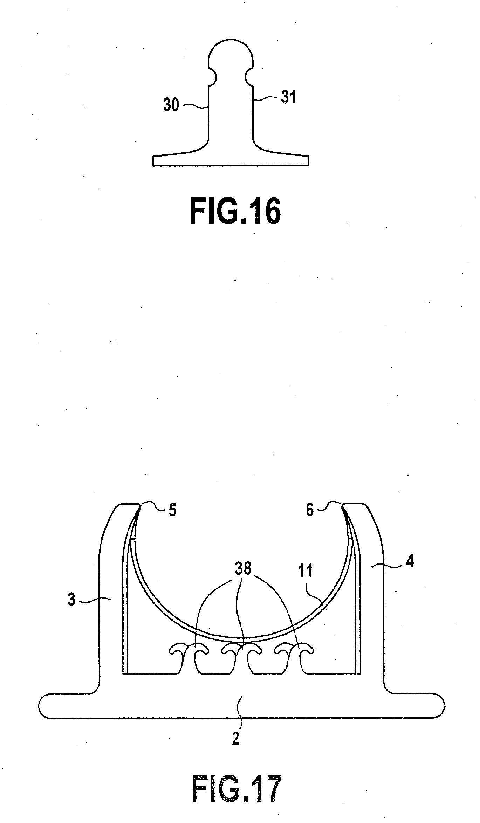

Suivant un autre mode de réalisation représenté à la figure 16, on peut prévoir deux rainures longitudinales dans les deux faces latérales 30 et 31 opposées, destinées à recevoir par encliquetage les bords latéraux d'extrémité.

Les deux modes de réalisations décrits ci dessus sont des perfectionnements mettant en jeu un clipsage ou un encliquetage. Ils ne sont cependant pas nécessaires en tant que tels à l'obtention de l'effet de l'invention ce dernier étant obtenu dès que un piédestal est introduit entre les deux parois latérales avec un contact mutuel maintenu, par exemple par le fait que les deux parois qui ont été écartées vers l'extérieur ont tendance à revenir vers l'intérieur en portant contre le muret.

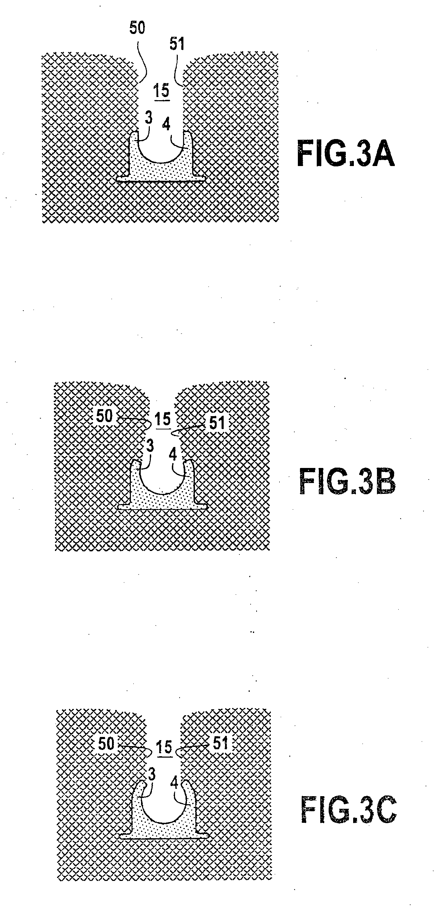

Une fois la coulée de la mousse terminée et la mousse durcie, on sort l'objet moulé du moule. Il est formé, à la surface extérieure de l'objet moulé, une tranchée 15 longitudinale (la direction en longueur étant perpendiculaire à la figure 3) ayant une forme sensiblement complémentaire de celle du muret 12. La mousse s'étend tout autour de l'élément 1 surmoulé à l'exception des faces intérieures en dessous des bords d'extrémité et du fond de l'espace intérieur ouvert. En particulier, la mousse s'étend jusqu'à recouvrir les surfaces supérieures des deux parois 3 et 4 latérales jusqu'aux points 5 et 6 les plus à l'intérieur des bords supérieurs des deux parois. La mousse définit deux faces verticales 50 et 51 de la tranchée, faces verticales qui s'étendent de l'ouverture supérieure de la tranchée qui débouche à l'extérieur de l'objet moulé jusqu'aux bords supérieurs respectifs des parois 3 et 4 formant les branches du U du surmoulé. Les tronçons d'extrémité sans crochets de la surface intérieure du surmoulé sont sensiblement parallèle et en continuité avec les faces verticales 50 et 51. Le passage des faces verticales 50 et 51 aux tronçons intérieurs respectifs se fait en douceur, sans aspérité, notamment au niveau de jonction.

Il est représenté aux Figures 3A, 3B et 3C une partie d'objets moulés ainsi obtenus. Bien évidemment, on peut prévoir suivant l'objet moulé plusieurs tranchées de ce genre comportant chacune au moins un élément à crochets suivant l'invention. En particulier, on peut prévoir un piédestal de très grande longueur, qu'on enserre de plusieurs éléments surmoulés à distance les uns des autres pour ainsi obtenir une tranchée comportant en son fond plusieurs surmoulés à distance les uns des autres.

Une fois le moulage de l'objet en mousse comportant un ou plusieurs surmoulés à crochets terminé et, notamment lorsque l'objet moulé est un coussin automobile, on est amené à le recouvrir d'un recouvrement. Ce recouvrement est lié à des éléments à boucles, qui vont venir coopérer avec les crochets pour fixer le recouvrement à l'objet moulé en le recouvrant notamment en en épousant la forme de sa surface extérieure.

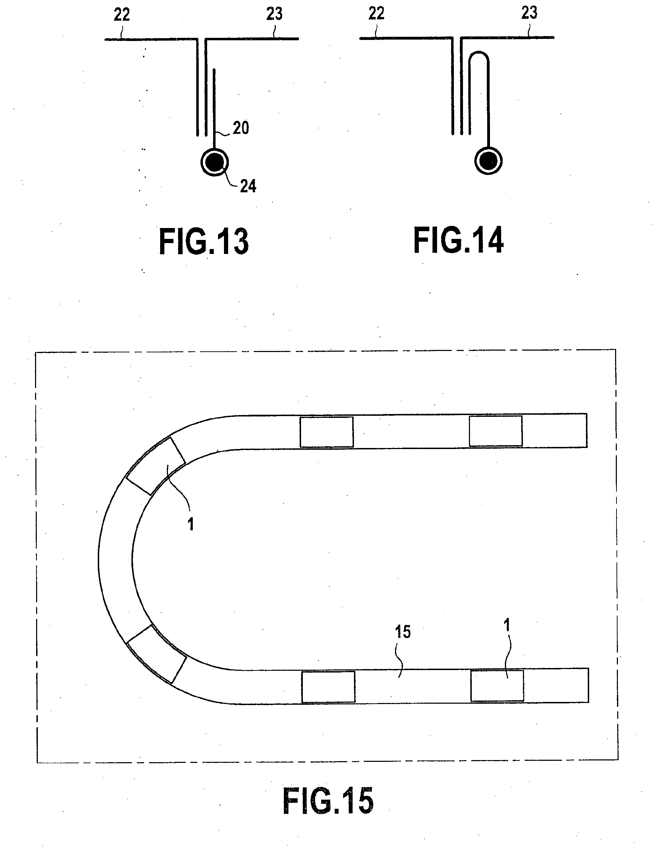

A la Figure 6, il est représenté un élément à boucles de ce genre. Il comporte un gousset 20 constitué d'une feuille de matière textile repliée sur elle même, des boucles étant issues de la surface extérieure du tube. Ces boucles 21 peuvent notamment avoir été tissées ou tricotées à la surface extérieure du gousset 20. Deux pièces en forme de feuilles 22 et 23 formant le recouvrement sont superposés au niveau de leur bord et le gousset est cousu sur le côté (voir les figures 13 et 14) des deux bords pour ainsi réunir les deux feuilles 22 et 23 pour former le recouvrement. Ainsi, on va insérer le gousset 20, qui se trouve à la jonction entre les deux feuilles 22 et 23, au fond de la tranchée 15 afin que les boucles viennent au contact des crochets pour ainsi fixer le recouvrement 22 autour de l'objet moulé, notamment le long des contours et des parois de la tranchée 15.

Aux Figures 7 et 8, il est représenté une vue de côté (l'objet moulé a été omis) de la liaison entre les crochets et les boucles. Au fond de la tranchée, ont été disposés, à titre d'illustration, deux éléments 1 surmoulés à crochets. Bien évidemment, la tranchée pourrait s'étendre en longueur sur une plus grande distance de manière à y prévoir plus que deux éléments à crochets.

Dans le gousset 20 de l'élément à boucles, il a été, en outre, inséré un jonc 24 constitué d'un barreau en matière plastique rigide de forme cylindrique circulaire, qui a pour fonction de rigidifier l'ensemble. Le jonc rigide en matière plastique est, par exemple, en polypropylène (PP) ou en polyéthylène (PE) et a un diamètre d'au moins 2mm, et notamment compris entre 2 et 10 mm. Cependant, on pourrait également prévoir un jonc creux, c'est à dire en forme de tube. Lorsque le jonc 24 rigide n'est pas présent à l'intérieur du gousset 20 textile, on obtient, dans la zone intermédiaire entre les deux éléments 1 à crochets, un effet de tente en ce que le gousset remonte, c'est-à-dire se courbe, de sorte à se déformer à la manière d'une tente, comme représenté à la Figure 7.

En revanche, lorsque l'on dispose à l'intérieur du gousset 20 le jonc rigide 24 en matière plastique, l'effet de tente disparaît, comme cela est représenté à la Figure 8. Ainsi, les deux éléments 1 représentés à la Figure 7 sont à une distance l'un de l'autre telle que, lorsqu'il n'y a pas de jonc 24, il y a un effet de tente et lorsqu'il y a un jonc 24 qui est inséré à l'intérieur du gousset 20, il n'y a plus d'effet de tente. En particulier, cette distance peut correspondre à une distance supérieure à 20 à 25 mm, sachant que l'on peut facilement atteindre 80 mm, voire 150 à 200 mm.

Comme indiqué à la figure 4A, une épaisseur du muret 12 est de préférence comprise entre 8 et 16 mm, plus préférentiellement entre 9 et 12 mm. Ces gammes de dimension d'épaisseur sont cependant également valables pour les autres modes de réalisation représentés aux dessins.

Au mode de réalisation correspondant aux figures 3B, 4B et 5B, le piédestal s'amincit vers le bas(c'est à dire dans la direction de la flèche F). Il en résulte une tranchée à la figure 3B dont la largeur s'amincit vers l'ouverture supérieure. Comme dans le mode de réalisation de la figure 3A cependant, les points 5 et 6 les plus à l'intérieur des bords supérieurs des deux parois ne dépassent pas des deux faces 50 et 51 de la gorge 50. Il en est de même dans le mode de réalisation de la figure 3C.

A la figure 11, on voit l'assemblage de la figure 8 suivant une coupe transversale à la tranchée. La largeur de la tranchée se mesure horizontalement à la figure. La somme du diamètre du jonc et de deux fois l'épaisseur de la feuille repliée sur elle même pour former le gousset est sensiblement égale à la largeur de la tranchée. En particulier il y a affleurement entre le gousset et chaque paroi de la tranchée. En pointillé il est représenté la mousse de moulage de l'objet moulé et notamment les deux surfaces verticales 50 et 51 formée par la mousse entre l'ouverture de la tranchée débouchant à l'extérieur de l'objet et les bords supérieurs des deux parois 3 et 4 qui sont ici des parois également verticales.

Dans tous les modes de réalisation représentés, la mousse recouvre la totalité ou sensiblement la totalité de la surface des bords supérieurs des parois du surmoulé formant les branches du U, c'est à dire jusqu' aux points 5 et 6 les plus à l'intérieur.

A la figure 12, on voit un autre mode de réalisation dans lequel le jonc est de section ovale ou elliptique en ayant son grand axe orienté dans la direction verticale à la figure, c'est à dire du fond de la tranchée vers l'extérieur. La largeur totale de l'élément à boucle (dimension du petit axe et deux fois l'épaisseur du gousset) est sensiblement égale à la dimension en largeur de la tranchée.

A la figure 15, il est représenté un mode de réalisation d'un objet moulé ayant une tranchée d'extension non rectiligne et comportant notamment des tronçons incurvés. Comme les éléments surmoulés n'ont pas besoin d'être disposés en continu, et notamment bout à bout dans la tranchée, l'assemblage est simplifié et notamment il n'est pas nécessaire de prévoir des éléments surmoulés de forme incurvée complémentaire de la forme du tronçon incurvée de la tranchée, les mêmes éléments de petites longueur et à grande distance les uns des autres utilisés dans les tronçons rectilignes convenant également dans les tronçons incurvées de faible courbure.

Dans la présente demande, on entend par crochet tout élément ayant une capacité à s'accrocher, notamment à une boucle. En particulier un crochet est un élément comportant une tige et une tête faisant saillie latéralement de cette tige. Ainsi, un élément en forme de champignon, de harpon, à double tête et analogue est au sens de l'invention un crochet.

Dans la présente demande, on a décrit un premier aspect de l'invention dans lequel une pluralité d'éléments surmoulés est prévues. Un exemple d'élément surmoulé dans le cadre de ce premier aspect est présenté aux figures. On pourrait cependant, dans le cadre de ce premier aspect, prévoir d'autres types d'éléments surmoulés, par exemple de simples bandes à crochets, surmoulés à l'aide d'un système de l'art antérieur dans lequel il est formé une cavité de protection des crochets au fond du moule, ou même en utilisant un cocon de protection simple pour protéger les crochets de la mousse versée.

Dans le cadre des deuxième et troisième aspects de l'invention, on a décrit la fixation mutuelle de l'objet moulé au recouvrement par une coopération de crochets issus de l'objet moulé et de boucles du recouvrement. Il est à noter que l'on pourrait également prévoir à la place des boucles des crochets qui coopéreraient avec les crochets des surmoulés à la manière d'un auto agrippant à crochets dans crochets et c'est pourquoi dans la cadre de ces deux deuxième et troisième aspect de l'invention, il faut comprendre le terme boucle dans une acception plus large qui englobe également le fait qu'il puisse s'agir de crochets. En revanche, dans le cadre du premier aspect, le terme boucle implique l'existence d'une ouverture à travers laquelle peut passer un élément d'accrochage et s'accrocher.

De même, dans la cadre du deuxième aspect, on peut prévoir son utilisation avec un seul élément surmoulé ou avec plusieurs d'entre eux sur un piédestal donné, et dans ce dernier cas on peut prévoir des les disposer à distance (on est alors également dans le cadre du premier aspect de l'invention) les uns des autres ou au contraire très proches les uns des autres, voire bout à bout si on le souhaite.

## Revendications

1. Assemblage comportant un objet moulé et un recouvrement (22, 23) qui recouvre au moins en partie la surface extérieure de l'objet moulé, au moins une gorge ou tranchée longitudinale (15) étant formée dans l'objet moulé en étant ouverte vers l'extérieur, au moins un élément à crochets (1) comportant des crochets (38) étant surmoulé à l'objet moulé de sorte à former au moins une partie du fond de la gorge (15), des crochets (38) dudit élément à crochets, de préférence tous les crochets dudit élément, pénétrant à l'intérieur d'ouvertures de boucles (21) issues du recouvrement (22, 23) pour s'y accrocher et assurer la fixation du recouvrement (22, 23) à l'objet moulé, **caractérisé en ce qu'**il est prévu au moins deux éléments surmoulés à crochets (1) qui forment au moins en partie le fond de la tranchée (15) en étant disposés l'un à la suite de l'autre dans la direction longitudinale, les deux éléments à crochets (1) étant séparés l'un de l'autre par une zone intermédiaire dans laquelle il n'y a pas d'élément à crochets (1), les boucles (21) sont issues de la surface extérieure d'un gousset (20) fixé au recouvrement (22, 23), et un jonc (24) s'étend à l'intérieur du gousset (20) de manière à empêcher la remontée du recouvrement (22, 23) vers le haut de la tranchée.

2. Assemblage suivant la revendication 1, **caractérisé en ce que** la longueur de la zone intermédiaire, c'est à dire la distance entre les deux éléments surmoulés (1) voisins successifs dans la direction longitudinale est telle que, sans le jonc (24), il apparaît un effet de remontée; et la matière et les dimensions du jonc (24) sont telles qu'il est suffisamment rigide pour qu'il y ait un moindre effet de remontée lorsqu'il est reçu dans le gousset (20), et notamment pour qu'il n'y en ait plus.

3. Assemblage suivant l'une des revendications précédentes, **caractérisé en ce que** les boucles (21) sont issues de la partie inférieure de la périphérie du gousset (20) .

4. Assemblage suivant l'une des revendications 1 à 3, **caractérisé en ce que** chaque élément surmoulé à crochet (1) a en section transversale la forme d'un U ou d'un C dont les deux branches (3, 4) sont dirigées vers l'extérieur de la gorge (15), la surface intérieure du U ou du C comportant deux tronçons d'extrémité distale dont aucun crochet ne fait saillie et un tronçon de fond intermédiaire (7) duquel les crochets (38) de l'élément surmoulé à crochet (1) font saillie.

5. Assemblage suivant la revendication 4, **caractérisé en ce que** la gorge (15) a deux faces latérales (50, 51) formées par la matière de moulage de l'objet moulé qui s'étendent de l'ouverture jusqu'aux bords distaux respectifs des branches (3, 4) du U ou du C de chaque élément à crochets (1) et les surfaces intérieures respectives des deux branches (3, 4) du U ou du C sont en affleurement avec les faces latérales respectives (50, 51).

6. Assemblage suivant la revendication 5, **caractérisé en ce que** les faces latérales (50, 51) de la gorge (15) sont au moins en partie rectilignes et viennent au droit des bords supérieurs intérieurs des branches respectives (3, 4) du U ou du C.

7. Assemblage suivant l'une des revendications précédentes, **caractérisé en ce que** la gorge (15) comporte au moins un tronçon de forme incurvée dans lequel s'étend au moins un élément surmoulé (1), de forme rectiligne ou incurvée, la longueur de l'élément surmoulé (1) étant moindre que celle du tronçon incurvé.

8. Assemblage suivant l'une des revendications 4 à 7, **caractérisé en ce que** la distance entre les points respectifs (5, 6) les plus à l'intérieur des bords supérieurs des deux branches (3, 4) du U ou du C de chaque surmoulé (1) est sensiblement égale à la dimension en largeur de l'élément à boucle hors les boucles, c'est à dire la somme de la dimension en largeur du jonc (24) et de deux fois l'épaisseur du gousset (20) hors les boucles (21), en étant cependant juste supérieure à cette dimension en largeur.

9. Assemblage suivant l'une des revendications précédentes, **caractérisé en ce que** le jonc (24) a une section transversale rectangulaire dont les coins sont arrondis, et notamment la longueur, dans le cas d'une forme rectangulaire, est orientée dans la direction allant du fond de la tranchée (15) vers l'extérieur.

10. Assemblage suivant l'une des revendications 1 à 8, **caractérisé en ce que** le jonc (24) a une section transversale de forme ovale, et notamment le plus grand axe étant orienté dans la direction verticale.

## Patentansprüche

1. Anordnung, umfassend ein geformtes Objekt und eine Abdeckung (22, 23), welche die Außenfläche des geformten Objekts zumindest teilweise abdeckt, wobei mindestens eine Längsnut oder -vertiefung (15) in dem geformten Objekt gebildet ist, indem es nach außen offen ist, wobei mindestens ein Hakenelement (1) Haken (38) umfasst, die an das geformten Objekt angespritzt sind, um mindestens einen Teil des Bodens der Nut (15) zu bilden, wobei Haken (38) des Hakenelements, vorzugsweise alle Haken des Elements, ins Innere der Öffnungen von Ringen (21) eindringen, die aus der Abdeckung (22, 23) hervorgehen, um daran befestigt zu werden und die Fixierung der Abdeckung (22, 23) an dem geformten Objekt zu gewährleisten, **dadurch gekennzeichnet, dass** mindestens zwei angespritzte Hakenelemente (1) vorgesehen sind, die zumindest teilweise den Boden der Vertiefung (15) bilden, indem sie in der Längsrichtung nacheinander angeordnet sind, wobei die zwei Hakenelemente (1) durch eine dazwischenliegende Zone voneinander getrennt sind, in der es kein Hakenelement (1) gibt, wobei die Ringe (21) aus der Außenfläche einer Lasche (20) hervorgehen, die an der Abdeckung (22, 23) fixiert ist, und sich ein Sicherungsring (24) im Inneren der Lasche (20) erstreckt, um zu verhindern, dass sich die Abdeckung (22, 23) zu der Oberseite der Vertiefung bewegt.

2. Anordnung nach Anspruch 1, **dadurch gekennzeichnet, dass** die Länge der dazwischenliegenden Zone, das heißt der Abstand zwischen zwei benachbarten angespritzten Elementen (1), die in der Längsrichtung aufeinanderfolgen, dergestalt ist, dass es ohne den Sicherungsring (24) zu einem Aufwärtsbewegungseffekt kommt, und das Material und die Abmessungen des Sicherungsrings (24) dergestalt sind, dass er steif genug ist, dass es zu einem geringeren Aufwärtsbewegungseffekt kommt, wenn er in der Lasche (20) aufgenommen wird, und insbesondere, dass es nicht mehr dazu kommt.

3. Anordnung nach einem der vorhergehenden Ansprüche, **dadurch gekennzeichnet, dass** die Ringe (21) aus dem unteren Teil des Umfangs der Lasche (20) hervorgehen.

4. Anordnung nach einem der Ansprüche 1 bis 3, **dadurch gekennzeichnet, dass** jedes angespritzte Hakenelement (1) im Querschnitt eine U- oder C-Form aufweist, deren zwei Arme (3, 4) zu der Außenseite der Nut (15) gerichtet sind, wobei die Innenfläche des U oder des C zwei distale Endabschnitte, von denen kein Haken hervorsteht, und einen Abschnitt vom dazwischenliegenden Boden (7) umfasst, von dem die Haken (38) des angespritzten Hakenelements (1) hervorstehen.

5. Anordnung nach Anspruch 4, **dadurch gekennzeichnet, dass** die Nut (15) zwei Seitenflächen (50, 51) aufweist, die durch das Formmaterial des geformten Objekts gebildet werden und die sich von der Öffnung bis zu den entsprechenden distalen Kanten der Arme (3, 4) des U oder des C von jedem Hakenelement (1) erstrecken, und die entsprechenden Innenflächen der zwei Arme (3, 4) des U oder des C mit den entsprechenden Seitenflächen (50, 51) bündig sind.

6. Anordnung nach Anspruch 5, **dadurch gekennzeichnet, dass** die Seitenflächen (50, 51) der Nut (15) zumindest teilweise geradlinig sind und sich mit den oberen Innenkanten der entsprechenden Arme (3, 4) des U oder des C auf gleicher Ebene befinden.

7. Anordnung nach einem der vorhergehenden Ansprüche, **dadurch gekennzeichnet, dass** die Nut (15) mindestens einen Abschnitt mit gekrümmter Form umfasst, in dem sich mindestens ein angespritztes Element (1) mit geradliniger oder gekrümmter Form erstreckt, wobei die Länge des angespritzten Elements (1) kleiner ist als die des gekrümmten Abschnitts.

8. Anordnung nach einem der Ansprüche 4 bis 7, **dadurch gekennzeichnet, dass** der Abstand zwischen den entsprechenden Punkten (5, 6), die sich am weitesten innerhalb der oberen Kanten der zwei Arme (3, 4) des U oder des C von jedem angespritzten Element (1) befinden, im Wesentlichen der Breitenabmessung des Ringelements außerhalb der Ringe entspricht, das heißt der Summe der Breitenabmessung des Sicherungsrings (24) und des Doppelten der Dicke der Lasche (20) außerhalb der Ringe (21), wobei er jedoch knapp größer ist als diese Breitenabmessung.

9. Anordnung nach einem der vorhergehenden Ansprüche, **dadurch gekennzeichnet, dass** der Sicherungsring (24) einen rechteckigen Querschnitt aufweist, dessen Ecken abgerundet sind, und insbesondere die Länge, im Falle einer rechteckigen Form, in der Richtung ausgerichtet ist, die vom Boden der Vertiefung (15) nach außen verläuft.

10. Anordnung nach einem der Ansprüche 1 bis 8, **dadurch gekennzeichnet, dass** der Sicherungsring (24) einen ovalen Querschnitt aufweist, und insbesondere die größte Achse in der vertikalen Richtung ausgerichtet ist.

## Claims

1. An assembly comprising a molded article and a cover (22, 23) that covers the outside surface of the molded article at least in part, at least one longitudinal groove or trench (15) being formed in the molded article while being open to the outside, at least one element (1) having hooks (38) being overmolded in the molded article so as to form the bottom of the groove (15) at least in part, some hooks (38), and preferably all of the hooks, penetrating into openings in loops (21) stemming from the cover (22, 23) so as to hook therein and thereby fasten the cover (22, 23) to the molded article, said assembly being **characterized in that** at least two overmolded elements (1) having hooks are provided that form the bottom of the trench (15) at least in part by being placed one behind the other in the longitudinal direction, the two elements (1) having hooks being separated from each other by an intermediate zone in which there is no element (1) having hooks, the loops (21) stem from the outside surface of a pocket fastened to the cover (22, 23) and a wire (24) extends inside the pocket (20) so as to prevent the cover (22, 23) from riding up towards the top of the trench (15).

2. An assembly according to claim 1, **characterized in that** the length of the intermediate zone, i.e. the distance between the two successive adjacent overmolded elements (1) in the longitudinal direction is such that, without the wire (24), a riding-up effect appears; and the material and the dimensions of the wire (24) are such that it is sufficiently rigid for the riding-up effect to be smaller when it is received in the pocket (20), and, in particular, for there no longer to be any riding-up effect.

3. An assembly according to any preceding claim, **characterized in that** the loops (21) stem from the bottom portion of the periphery of the pocket (20).

4. An assembly according to any one of claims 1 to 3, **characterized in that**, in cross-section, each overmolded element (1) having hooks has a U-shape or a C-shape, the two branches (3, 4)of which shape extend towards the outside of the groove (15), the inside surface of the U-shape or of the C-shape having two distal end segments from which no hook projects, and an intermediate bottom segment (7) from which the hooks (38) of the overmolded element (1) having hooks project.

5. An assembly according to claim 4, **characterized in that** the groove (15) has two side faces (50, 51) formed by the material of which the molded article is molded, which faces extend from the opening to the respective distal edges of the branches (3, 4) of the U-shape or of the C-shape of each element (1) having hooks and the respective inside surfaces of the two branches (3, 4) of the U-shape or of the C-shape are flush with the respective side faces (50, 51).

6. An assembly according to claim 5, **characterized in that** the side faces (50, 51) of the groove (15) are at least in part straight and come into register with the inside top edges of the respective branches (3, 4) of the U-shape or of the C-shape.

7. An assembly according to any preceding claim, **characterized in that** the groove (15) includes at least one segment of curved shape in which at least one overmolded element (1) extends that is of straight or curved shape, the length of the overmolded element (1) being less than the length of the curved segment.

8. An assembly according to any one of claims 4 to 7, **characterized in that** the distance between the respective innermost points (5, 6) of the top edges of the two branches (3, 4) of the U-shape or of the C-shape of each overmolded element (1) is substantially equal to the width dimension of the element having loops excluding the loops, i.e. the sum of the width dimension of the wire (24) and of twice the thickness of the pocket (20) excluding the loops (21), while nevertheless being just greater than this width dimension.

9. An assembly according to any preceding claim, **characterized in that** the wire (24) has a rectangular cross-section, the corners of which are rounded, and in particular the length, when the wire has a rectangular cross-section, extends in the direction going from the bottom of the trench (15) towards the outside.

10. An assembly according to any one of claims 1 to 8, **characterized in that** the wire (24) has a cross-section that is of oval shape, and in particular the major axis of the oval shape extends in the vertical direction.
